# EUROPEAN PATENT APPLICATION

(11) **EP 4 734 188 A1**
(43) Date of publication of application: **29.04.2026**
(21) Application number: 24904203.7
(22) Date of filing: 09.12.2024
(51) Int. Cl.: H01M 4/62, H01M 4/134, H01M 10/0525, H01M 4/58, H01M 4/02

(54) **NEGATIVE ELECTRODE FOR LITHIUM SECONDARY BATTERY AND LITHIUM SECONDARY BATTERY INCLUDING SAME**

(30) Priority: 11.12.2023 KR 20230179123
(71) Applicant: LG Energy Solution, Ltd., Seoul 07335 (KR)
(72) Inventor: SEO, Jung-Hyun, Daejeon 34122 (KR); KIM, Ki-Hyun, Daejeon 34122 (KR); KIM, Myeong-Seong, Daejeon 34122 (KR); KIM, Yun-Jung, Daejeon 34122 (KR); LEE, Chang-Hoon, Daejeon 34122 (KR)
(74) Representative: Goddar, Heinz J.
(86) International application number: PCT/KR2024/020065
(87) International publication number: WO 2025/127638

(57) **Abstract**

The present invention relates to a negative electrode for a lithium secondary battery, using lithium metal as a negative electrode active material, and, specifically, to a negative electrode for a lithium-sulfur battery, having, on a lithium metal layer, a protective layer comprising ion conductive inorganic particles and a binder polymer, and thus exhibiting the effect of improving the lifespan and coulombic efficiency of the lithium secondary battery.

## Description

### TECHNICAL FIELD

The present disclosure relates to a negative electrode for use in a lithium secondary battery. More particularly, the present disclosure relates to a negative electrode that may be used in a lithium-sulfur battery.

This application is based on and claims priority from Korean Patent Application No. 2023-0179123, filed on December 11, 2023, with the Korean Intellectual Property Office, the disclosure of which is incorporated herein in its entirety by reference.

### BACKGROUND

As lithium secondary batteries are used in a wide range of applications including not only portable electronic devices but also electric vehicles (EV) and energy storage systems (ESS), there is an increasing demand for lithium secondary batteries with higher capacity, higher energy density and longer life.

Among lithium secondary batteries, lithium-sulfur batteries are a battery system using a sulfur-based material containing a sulfur-sulfur bond as a positive electrode active material, and a lithium metal, a carbon-based material in which intercalation/deintercalation of lithium ions takes place, or silicon or tin that forms an alloy with lithium as a negative electrode active material.

In lithium-sulfur batteries, the theoretical specific capacity based on conversion reaction (S₈ +16Li⁺ +16e⁻ → 8Li₂S) between lithium ions and sulfur in the positive electrode amounts to 1,675 mAh/g, and when lithium metal is used as the negative electrode, the theoretical energy density is 2,600 Wh/kg. Because this value is higher than the theoretical energy density of other battery systems currently being studied (Ni-MH battery: 450 Wh/kg, Li-FeS battery: 480 Wh/kg, Li-MnO₂ battery: 1,000 Wh/kg, Na-S battery: 800 Wh/kg) and lithium ion batteries (250 Wh/kg), lithium-sulfur batteries are gaining attention as a high-capacity, eco-friendly and low-cost lithium secondary battery among secondary batteries developed so far.

However, during charging of lithium-sulfur batteries, lithium ions may be reduced into lithium metal on solid electrolyte interface (SEI) surface on the negative electrode to form an uneven surface of the negative electrode, causing uneven resistance distribution. When the process of charging and discharging is repeatedly performed, lithium deposits unevenly to form dendrites and inactive lithium.

The dendrites are the major cause of separator damage and short circuits, and in these circumstances, many studies are being made to achieve uniform lithium ion stripping and lithium plating on negative electrode surface of lithium-sulfur batteries.

### DISCLOSURE

### Technical Problem

To solve the above-described problems, the present disclosure is directed to providing a negative electrode having a protective layer.

Specifically, the present disclosure is directed to providing a negative electrode having a protective layer for achieving lithium ion stripping and lithium plating at a uniform rate on the surface of the negative electrode during charging and discharging and suppressing the growth of lithium ion dendrites.

The present disclosure is further directed to providing a lithium secondary battery, in particular, a lithium-sulfur battery, with improved life.

### Technical Solution

To achieve the above-described objective,
according to an aspect of the present disclosure, there is provided a negative electrode for a lithium secondary battery of the following embodiments.

The negative electrode according to a first embodiment includes:
a lithium metal layer and a protective layer on at least a part of a surface of the lithium metal layer,
wherein the protective layer includes ion conductive inorganic particles and a binder polymer, and
wherein a thickness of the protective layer ranges from 4% to 15% based on 100% thickness of the lithium metal layer.

According to a second embodiment, in the first embodiment,
an average particle size (D₅₀) of the ion conductive inorganic particles may be 50% or less of the thickness of the protective layer.

According to a third embodiment, in the first or second embodiment,
the thickness of the protective layer may range from 0.5 µm to 5 µm.

According to a fourth embodiment, in any one of the first to third embodiments,
the thickness of the protective layer may range from 1 µm to 3.5 µm.

According to a fifth embodiment, in any one of the first to fourth embodiments,
the protective layer may include at least one hole having a diameter of 2 µm or more in the surface thereof.

According to a sixth embodiment, in any one of the first to fifth embodiments,
the protective layer may include at least one hole having a diameter of 2 µm or more in the surface thereof, and the surface of the lithium metal layer may be exposed to an outside at a location at which the hole is formed.

According to a seventh embodiment, in any one of the first to sixth embodiments,
the protective layer may include at least one hole having a diameter of 2 µm or more in the surface thereof, and the diameter of the hole may range from 2 µm to 10 µm.

According to an eighth embodiment, in any one of the first to seventh embodiments,
an area in which the protective layer is formed on the lithium metal layer may be 50% or more based on 100% area of the surface of the lithium metal layer having the protective layer.

According to a ninth embodiment, in any one of the first to eighth embodiments,
the ion conductive inorganic particles may include lithium lanthanum zirconate (LLZO), lithium aluminum titanium phosphate (LATP), lithium aluminum germanium phosphate (LAGP), lithium lanthanum titanate (LLTO) or a mixture thereof.

According to a tenth embodiment, in any one of the first to ninth embodiments,
the binder polymer may include a polymer including a vinylidene-derived repeating unit and a hexafluoropropylene (HFP)-derived repeating unit.

According to an eleventh embodiment, in any one of the first to tenth embodiments,
the binder polymer may include a polymer including a vinylidene-derived repeating unit and a hexafluoropropylene (HFP)-derived repeating unit, and the polymer including the vinylidene-derived repeating unit and the hexafluoropropylene (HFP)-derived repeating unit may have a HFP substitution ratio between 3% and 20%.

According to a twelfth embodiment, in any one of the first to eleventh embodiments,
a mass ratio of the ion conductive inorganic particles to the binder polymer may range from 99:1 to 50:50

According to another aspect of the present disclosure, there is provided a lithium secondary battery of the following embodiments.

The lithium secondary battery according to a thirteenth embodiment may include:
the negative electrode for the lithium secondary battery according to any one of the first to twelfth embodiments, a positive electrode, a separator between the negative electrode and the positive electrode, an electrolyte and a battery case.

According to a fourteenth embodiment, in the thirteenth embodiment,
the positive electrode may include a sulfur-based compound containing a sulfur (S)-sulfur (S) bond as an active material.

According to a fifteenth embodiment, in the thirteenth or fourteenth embodiment,
the active material of the positive electrode may include a sulfur-carbon composite in which the sulfur-based compound is loaded onto at least one of an outer surface of a porous carbon material and an inside of pores of the porous carbon material.

According to a sixteenth embodiment, in any one of the thirteenth to fifteenth embodiments,
the active material of the positive electrode may include a sulfur-carbon composite, and the sulfur-carbon composite may include the sulfur-based compound in an amount of 65 wt% or more based on a total weight of the sulfur-based compound and the porous carbon material.

According to a seventeenth embodiment, in any one of the thirteenth to sixteenth embodiments,
the lithium secondary battery may include a coin-type battery, a pouch-type battery or a cylindrical battery.

According to still another aspect of the present disclosure, there is provided a method for manufacturing a lithium secondary battery of the following embodiments.

The method for manufacturing the lithium secondary battery according to an eighteenth embodiment includes the steps of:
preparing a negative electrode having a protective layer on at least a part of a surface thereof; and
placing a separator between a positive electrode and the negative electrode.

Here, the protective layer is present on a contact surface between the negative electrode and the separator, and
the step of preparing the negative electrode includes:
coating a slurry for forming the protective layer on at least a part of a surface of a lithium metal layer and drying to form the protective layer, and
the slurry for forming the protective layer includes ion conductive inorganic particles and a binder polymer.

Here, a thickness of the protective layer may range from 4% to 15% based on 100% thickness of the lithium metal layer.

### Advantageous Effects

According to an aspect, through the protective layer, the negative electrode of the present disclosure may achieve uniform lithium ion stripping and lithium plating on the negative electrode surface during charging and discharging, and suppress the growth of lithium ion dendrites.

Through this, by using the negative electrode of the present disclosure, lithium secondary batteries, in particular, lithium-sulfur batteries with improved life and Coulombic efficiency may be provided.

According to an aspect, the lithium secondary battery according to the present disclosure may achieve the capacity retention of 80% compared to the initial discharge capacity in 200 cycles or more, in particular, 300 cycles or more when discharged at 1C.

### BRIEF DESCRIPTION OF THE DRAWINGS

FIG. 1 is a scanning electron microscopic (SEM) image acquired by observing the surface of a negative electrode of Example 3 in this specification at 5 kV using a field emission scanning electron microscope (FESEM) (Jeol, IT-800 SHL) at 1000x magnification. The dotted line indicates areas where holes having the size of 2 µm or more in diameter are observed.
FIG. 2 is a SEM image acquired by observing the surface of a negative electrode of Comparative Example 4 in this specification.
FIG. 3 is a SEM image acquired by observing the surface of a negative electrode of Comparative Example 5 in this specification.

### BEST MODE

Hereinafter, the present disclosure will be described in more detail.

The term "composite" as used herein refers to a material in which two or more materials are combined to form physically or chemically different phases and which exhibits more effective functions.

The term "(poly)sulfide" as used herein is the concept that covers "(poly)sulfide ion (Sₓ²⁻ , 1≤x≤8)" and "lithium (poly)sulfide (Li₂Sₓ or Li₂Sₓ⁻ 1≤x≤8)".

The term "polysulfide" used herein is the concept that covers "polysulfide ion (Sₓ²⁻, 1<x≤8)" and "lithium polysulfide (Li₂Sₓ or Li₂Sₓ⁻ 1<x≤8)".

A lithium secondary battery has a characteristic that lithium ions are reduced on the negative electrode surface during charging and discharging, and lithium metal deposits on the negative electrode over repeated charge and discharge cycles.

According to an aspect of the present disclosure, there is provided a negative electrode in which stripping and plating of lithium ions on the negative electrode surface is performed at a uniform rate and dendrite formation of lithium ions on the negative electrode surface is suppressed, thereby improving the life of a lithium secondary battery using the same.

The negative electrode according to an aspect of the present disclosure includes a lithium metal layer and a protective layer on at least a part of one surface of the lithium metal layer.

According to an aspect of the present disclosure, the protective layer includes ion conductive inorganic particles and a binder polymer.

According to an aspect of the present disclosure, the thickness of the protective layer ranges from 4% to 15% based on 100% thickness of the lithium metal layer.

In an embodiment of the present disclosure, the ion conductive inorganic particle refers to an inorganic particle for improving ionic conductivity of an electrolyte and mechanical strength of the negative electrode. The ion conductive inorganic particle is not limited to a particular type and may include any commonly used ones that achieve the above-described effects.

For example, according to an embodiment of the present disclosure, the ion conductive inorganic particle may include lithium lanthanum zirconium oxide (LLZO), lithium aluminum titanium phosphate (LATP), lithium aluminum germanium phosphate (LAGP), lithium lanthanum titanate (LLTO) or a mixture thereof, but the present disclosure is not limited thereto.

According to an embodiment of the present disclosure, the protective layer may only include lithium lanthanum zirconium oxide (LLZO) as the ion conductive inorganic particle, but the present disclosure is not limited thereto.

According to an embodiment of the present disclosure, the ion conductive inorganic particle may include a coated or substituted form of the above-described inorganic particle with a small amount of another metal at least in part. The coating or substitution of the at least a part of the ion conductive inorganic particle with another metal may have a beneficial effect on increasing ionic conductivity of the inorganic particle and stabilizing the crystal structure. Specifically, the ion conductive inorganic particle may have a structure in which at least a part of the surface of the ion conductive inorganic particle is coated with another metal, and/or a part of the crystal structure of the ion conductive inorganic particle is substituted with another metal.

Specifically, the ion conductive inorganic particle may include LLZO, LATP, LAGP, LLTO, or their coated and/or substituted form in which at least a part of the surface of these particles is coated and/or substituted with another metal, or a mixture thereof.

In an embodiment of the present disclosure, the metal that may be coated or substituted on the surface of the ion conductive inorganic particle may include, for example, boron (B), aluminum (Al), gallium (Ga), indium (In), calcium (Ca), zirconium (Zr), niobium (Nb), molybdenum (Mo), ruthenium (Ru), palladium (Pd), silver (Ag), tantalum (Ta), tungsten (W), iridium (Ir), platinum (Pt), gold (Au), yttrium (Y), scandium (Sc) or two or more of them, but the present disclosure is not limited thereto.

In an embodiment of the present disclosure, considering the thickness of the protective layer, the ion conductive inorganic particles having the average particle size D₅₀ of 500 nm or less may be preferred. When the size of the ion conductive inorganic particle is overly large, thickness uniformity of the protective layer may be reduced when forming the protective layer with a small thickness, leading to an insignificant effect of the protective layer on suppressing degradation of the negative electrode, but the present disclosure is not limited thereto.

Specifically, the average particle size D₅₀ of the ion conductive inorganic particles may range, for example, from 5 nm to 500 nm, and specifically from 100 nm to 500 nm, from 200 nm to 400 nm, from 250 nm to 350 nm, or from 250 nm to 300 nm. The ion conductive inorganic particles may exist in a form of secondary particles which are agglomerates of primary particles. In this specification, the average particle size D₅₀ of the ion conductive inorganic particles is based on the size of the primary particles.

In this specification, the "average particle size Dn" refers to a particle size at n% point of volume cumulative distribution of particles. That is, D₅₀ refers to a particle size at 50% point of volume cumulative distribution of particles. The Dn may be measured using a laser diffraction method. Specifically, the particle size distribution is calculated by dispersing a target powder in a dispersion medium, feeding it into a commercially available laser diffraction particle size measurement device (for example, Microtrac S3500) and measuring a difference in diffraction pattern according to particle size when particles pass through a laser beam. The Dn may be measured by calculating a particle diameter at n% point of volume cumulative distribution of the particles according to particle size in the measurement device.

According to an embodiment of the present disclosure, the binder polymer may be, for example, included to hold the ion conductive inorganic particles together and form bonds between the ion conductive inorganic particles and the lithium metal layer, although its use is not limited thereto. Accordingly, the binder polymer may include any commonly used binder polymer that achieves the above-described effects without limitation.

According to an embodiment of the present disclosure, in view of stability when used with the ion conductive inorganic particles, the binder polymer may include polymer including a vinylidene-derived repeating unit and a hexafluoropropylene (HFP)-derived repeating unit.

In an embodiment of the present disclosure, when the hexafluoropropylene (HFP)-derived repeating unit is not included as the binder polymer, time-dependent stability of a slurry for forming the protective layer may be reduced by reaction of the binder polymer with the ion conductive inorganic particles, dispersibility of the ion conductive inorganic particles and/or the binder polymer in the slurry may be reduced, or the color of the protective layer may change, and accordingly, the binder polymer includes the hexafluoropropylene (HFP)-derived repeating unit, and in terms of improved adhesive strength of the binder polymer, the vinylidene-derived repeating unit is used.

Specifically, the polymer including the vinylidene-derived repeating unit and the hexafluoropropylene (HFP)-derived repeating unit includes a vinylidene compound and hexafluoropropylene as monomers, and refers collectively to polymers made up of these monomers bonded together (called polymerization). In this instance, the polymerization of the monomers refers collectively to block polymerization, alternating polymerization, or random polymerization of two or more different monomers, and the present disclosure is not limited thereto.

In an embodiment of the present disclosure, the polymer including the vinylidene-derived repeating unit and the hexafluoropropylene (HFP)-derived repeating unit may include, for example, polyvinylidene fluoride-hexafluoropropylene (PVDF-HFP).

In an embodiment of the present disclosure, in terms of adhesiveness of the binder polymer, the polymer including the vinylidene-derived repeating unit and the hexafluoropropylene (HFP)-derived repeating unit preferably has an HFP substitution ratio of 50% or less. Specifically, the HFP substitution ratio may range from 1% to 50%, from 3% to 30%, from 3% to 20%, and specifically from 5% to 15%, from 8% to 15%, or from 8% to 10%.

In this specification, the HFP substitution ratio refers to a ratio (%) of the number of hexafluoropropylene-derived repeating units based on the total number of monomers in the binder polymer. That is, the HFP substitution ratio of the polymer including the vinylidene-derived repeating unit and the hexafluoropropylene-derived repeating unit refers to a ratio of the number of hexafluoropropylene-derived repeating units based on the total number of vinylidene-derived repeating units and hexafluoropropylene-derived repeating units. This may be analyzed by a commonly used analysis method for measuring an amount of functional groups in polymer.

In an embodiment of the present disclosure, the main component having the degradation suppression function for the negative electrode in the protective layer is the ion conductive inorganic particles, and the protective layer preferably includes the ion conductive inorganic particles as the main component. For example, the ion conductive inorganic particles may be present in an amount of 50 wt% or more, and specifically from 50 wt% to 99 wt%, from 60 wt% to 99 wt%, from 70 wt% to 95 wt%, from 80 wt% to 95 wt%, and from 85 wt% to 90 wt%, based on the total weight of the protective layer. When the amount of the ion conductive inorganic particles lies in the aforementioned range, this may have a beneficial effect on degradation suppression of the negative electrode and improved life of a lithium secondary battery.

In another embodiment of the present disclosure, the ion conductive inorganic particles and the binder polymer may be, for example, included in a mass ratio of from 99:1 to 50:50 (ion conductive inorganic particles : binder polymer). Specifically, the mass ratio may range from 99:1 to 60:40, from 95:5 to 70:30, from 90:10 to 80:20, or from 90:10 to 85:15, but the present disclosure is not limited thereto.

The negative electrode according to an aspect of the present disclosure may have the protective layer having the above-described composition with a thickness of 4% to 15% based on 100% thickness of the lithium metal layer.

When the protective layer includes the ion conductive inorganic particles and the binder polymer, but the protective layer is overly thick relative to the weight of the lithium metal layer containing a negative electrode active material, it is not good for battery capacity, and when the protective layer is overly thin, the performance of the protective layer is insignificant, and thus, the thickness of the protective layer may be limited to 4% to 15% based on 100% thickness of the lithium metal layer.

In an embodiment of the present disclosure, specifically the thickness of the protective layer may range from 4% to 15%, from 5% to 15%, from 5% to 13%, from 5% to 10.5%, or from 5% to 10%, based on 100% thickness of the lithium metal layer.

In this specification, the thickness of each of the lithium metal layer and the protective layer may be measured using a known thickness gauge. For example, the thickness of each of the lithium metal layer and the protective layer may be measured using a U-Hite thickness gauge from TESA Corporation. Specifically, the thickness may be measured using the commercially available thickness gauge under the conditions of 0.6 N and 0.01 µm accuracy.

The thickness ratio of the protective layer based on 100% thickness of the lithium metal layer may be measured by measuring the thickness of each of the lithium metal layer and the protective layer, and calculating a ratio of the thicknesses. Alternatively, the thickness ratio of the lithium metal layer and the protective layer may be measured and calculated through a scanning electron microscopic (SEM) image of the cross section of the negative electrode.

In an embodiment of the present disclosure, the protective layer may be formed on at least a part of one surface of the lithium metal layer. Specifically, the protective layer may fully cover one surface of the lithium metal layer, or the protective layer may cover a part of one surface of the lithium metal layer with a part of one surface of the lithium metal layer exposed to the outside.

In this instance, the thickness of the protective layer is measured based on the area in which the protective layer covers the surface of the lithium metal layer, and preferably, after measuring the thickness at a minimum of 5 points, an average value is calculated as the thickness of the protective layer.

In an embodiment of the present disclosure, the thickness of the lithium metal layer may be, for example, 20 µm or more. For example, the thickness of the lithium metal layer may range from 20 µm to 100 µm, from 20 µm to 80 µm, from 20 µm to 70 µm, from 20 µm to 60 µm, from 20 µm to 55 µm, from 25 µm to 55 µm, from 25 µm to 50 µm, from 25 µm to 45 µm, from 30 µm to 45 µm, from 25 µm to 40 µm, from 25 µm to 35 µm, or 30 µm. When the thickness of the lithium metal layer lies in the aforementioned range, this may have a beneficial effect on packing density of the battery and energy density of the battery, but the present disclosure is not limited thereto.

In an embodiment of the present disclosure, the thickness of the protective layer may range, for example, from 0.5 µm to 5 µm. For example, the thickness of the protective layer may range from 0.5 µm to 4 µm, from 1 µm to 3.5 µm, from 1 µm to 3 µm, from 1.5 µm to 3.1 µm, from 1.5 µm to 3.0 µm, from 1.5 µm to 2.5 µm, from 1.5 µm to 2.5 µm, or from 1.5 µm to 2.0 µm.

As described above, according to an embodiment of the present disclosure, the protective layer may be formed on a part of the surface of the lithium metal layer. The protective layer may be formed by intentionally coating and drying a slurry for forming the protective layer on a part of the surface of the lithium metal layer, or by forming a hole in the surface of the protective layer by a systematic relationship between the weight ratio of the ion conductive inorganic particles and the binder polymer and the thickness of the protective layer in the process of forming the protective layer, or both.

Specifically, the protective layer may have at least one hole having a size that can be observed with the naked eye or using a microscope in the surface. For example, the protective layer may include at least one hole having a diameter of 2 µm or more in the surface. For example, the diameter of the hole may range from 2 µm to 10 µm.

According to an embodiment of the present disclosure, the negative electrode may have a structure in which the surface of the lithium metal layer under the protective layer is exposed to the outside at a location at which the hole is formed in the surface of the protective layer. In this case, as the surface of the lithium metal layer is exposed to the outside through the hole, the charge/discharge efficiency of the battery using the same may be further improved, and the Coulombic efficiency of the battery may be increased, but the present disclosure is not limited thereto.

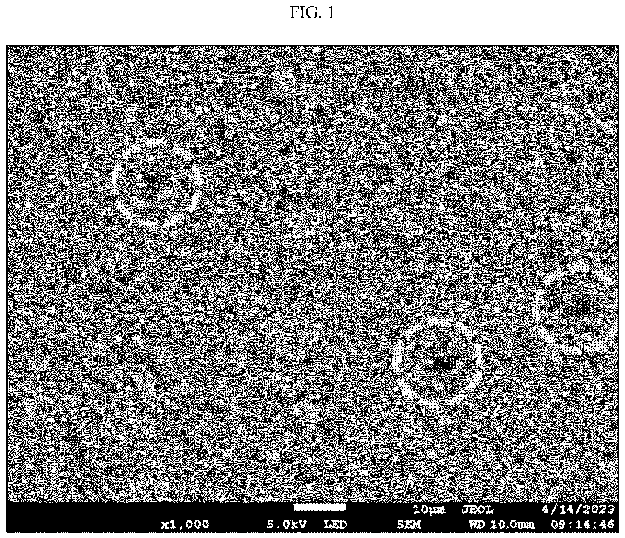

FIG. 1 shows a SEM image of the surface of the negative electrode according to an embodiment of the present disclosure, observed using a field emission scanning electron microscope (FESEM) (Jeol, IT-800 SHL). Referring to FIG. 1, it is confirmed that a large number of ion conductive inorganic particles are distributed on the surface of the negative electrode, and in this instance, the negative electrode has a plurality of holes having a diameter of 2 µm or more, through which the surface of the lithium metal layer is exposed to the outside.

In an embodiment of the present disclosure, 2 to 10 holes are preferably observed in a measurement area of 120 µm X 90 µm when observed by SEM. For example, when the number of holes in the measurement area lies in the above-described range, this may have a beneficial effect on suppressing the growth of lithium dendrites and improving ionic conductivity. For example, when the number of holes in the measurement area is overly large, a larger amount of lithium is detached through the holes irrespective of the presence or absence of the protective layer, and uneven deposition occurs around the holes when plating, thereby failing to control the growth of lithium dendrites. On the contrary, when there is no hole in the measurement area, lithium ions move between the inorganic particles and the binder polymer, resulting in low ionic conductivity, causing capacity decline of the cell.

In another embodiment of the present disclosure, even though the above-described number of holes are observed in the measurement area, the diameter of the hole may be preferably 2 µm or more, and specifically in a range between 2 µm and 10 µm. When the diameter of the hole is overly small, lithium stripping may be slowed down and ionic conductivity may be reduced, resulting in insufficient capacity of the cell. In addition, when the diameter of the hole is overly large, it may fail to control the shape of lithium deposition around the hole, resulting in overgrowth of lithium dendrites.

According to an embodiment of the present disclosure, the protective layer may preferably have the aforementioned thickness range and includes 2 to 10 holes of 2 µm or more, and specifically 2 µm to 10 µm in diameter within the measurement area of 120 µm X 90 µm on one surface thereof.

In an embodiment of the present disclosure, in order to enhance the performance improvement effect of the protective layer including the ion conductive inorganic particles and the binder polymer, the area of the lithium metal layer covered by the protective layer may be 50% or more, and for example, range from 50% to 100%, from 50% to 99%, from 60% to 95%, from 70% to 95%, or from 80% to 90% or from 85% to 90% based on 100% area of one surface of the lithium metal layer, but the present disclosure is not limited thereto.

In this specification, the area in which the protective layer is formed on the lithium metal layer based on 100% area of one surface of the lithium metal layer having the protective layer may be measured through the SEM image of the surface of the negative electrode as described above. For example, the SEM image of the surface of the negative electrode may be acquired, followed by image processing to distinguish the area where the lithium metal layer is exposed from the area where the protective layer is formed, and a ratio of the area of the protective layer to the total area of one surface of the negative electrode may be calculated, but the measurement method is not limited thereto.

In an embodiment of the present disclosure, as described above, when the size of the ion conductive inorganic particles is overly large, thickness uniformity of the protective layer may be reduced when forming the protective layer with a small thickness, leading to an insignificant effect of the protective layer on degradation suppression of the negative electrode. Considering this, in an embodiment of the present disclosure, for thickness uniformity and thickness control of the protective layer, the average particle size D₅₀ of the ion conductive inorganic particles may be equal to or smaller than 50% of the thickness of the protective layer.

For example, the average particle size D₅₀ of the ion conductive inorganic particles may range from 1% to 50%, from 1% to 30%, from 1% to 20%, from 5% to 20%, from 1% to 10%, or from 5% to 10% of the thickness of the protective layer, and this may have a beneficial effect on improving the performance of the negative electrode and improving the performance of a lithium secondary battery, but the present disclosure is not limited thereto.

As described above, when the ion conductive inorganic particles exist in the form of secondary particles which are agglomerates of primary particles, the average particle size D₅₀ of the ion conductive inorganic particles is based on the size of the primary particles.

In an embodiment of the present disclosure, the slurry for forming the protective layer may be, for example, prepared as follows.

For the components of the protective layer, the ion conductive inorganic particles and the binder polymer refer to the foregoing description.

In an embodiment of the present disclosure, the slurry for forming the protective layer may be prepared by dispersing and mixing the ion conductive inorganic particles and the binder polymer in an appropriate solvent. In this instance, because the slurry for forming the protective layer may be directly coated on the lithium metal layer and dried to form the protective layer, the solvent preferably includes a non-aqueous solvent.

In another embodiment of the present disclosure, in order to improve time-dependent stability, the slurry for forming the protective layer may be prepared by preparing a dispersion solution of the ion conductive inorganic particles and a binder solution containing the binder polymer dissolved, and mixing them.

In an embodiment of the present disclosure, in view of reactivity with the lithium metal layer, dispersibility of the inorganic particles and the type of the binder polymer as described above, the solvent for the preparation of the slurry for forming the protective layer may preferably include the non-aqueous solvent.

In an embodiment of the present disclosure, the non-aqueous solvent may include, for example, tetrahydrofuran (THF), dimethoxyethane (DME), N-methyl-2-pyrrolidone (NMP), acetone, acetonitrile, dichloromethane, dimethylformamide, dimethyl sulfoxide, ethyl acetate or a mixture thereof, but the present disclosure is not limited thereto.

In an embodiment of the present disclosure, for thickness control and thickness uniformity of the protective layer, the solid content in the slurry for forming the protective layer may be adjusted. For example, the solid content in the slurry for forming the protective layer may be preferably 50 wt% or less, and for example, preferably range from 10 wt% to 40 wt%, from 15 wt% to 40 wt%, from 15 wt% to 30 wt%, from 15 wt% to 25 wt%, or from 20 wt% to 25 wt%. When the solid content in the slurry for forming the protective layer lies in the aforementioned range, this may have a beneficial effect on small and uniform thickness of the protective layer, and also may have a beneficial effect on forming the hole in the surface of the protective layer.

In an embodiment of the present disclosure, the protective layer may be formed by coating the slurry for forming the protective layer to one surface of the lithium metal layer and drying it.

In an embodiment of the present disclosure, after the slurry for forming the protective layer is coated on one surface of the lithium metal layer, a flattening process may be performed using a Mayer bar for the purpose of thickness uniformity.

In an embodiment of the present disclosure, the method for manufacturing the protective layer may include, after coating the slurry for forming the protective layer, drying the slurry in an oven of 40°C to 60°C, for example, 50°C, but is not limited thereto.

In an embodiment of the present disclosure, the lithium metal layer may be a thin film layer including lithium metal (Li) alone.

In another embodiment of the present disclosure, the lithium metal layer may be a thin film layer made of lithium and a lithium alloy of lithium and a material that forms an alloy with the lithium, for example, silicon, tin, sodium, potassium, rubidium, cesium, francium, beryllium, magnesium, calcium, strontium, barium, radium aluminum or two or more of them.

In an embodiment of the present disclosure, the negative electrode may be in the form of a free-standing film including the lithium metal layer and the protective layer without a support.

In another embodiment of the present disclosure, the negative electrode may include the lithium metal layer and the protective layer on the support.

In this instance, the support may include a current collector commonly used in an electrode for a lithium secondary battery or a polyolefin porous support used as a separator, but is not limited thereto.

In an embodiment of the present disclosure, the current collector is not limited to a particular type and may include any current collector that supports the lithium metal layer, and has high conductivity without causing any chemical change in a lithium secondary battery using the same. For example, the current collector may include copper, stainless steel, aluminum, nickel, titanium, palladium, sintered carbon, copper or stainless steel treated with carbon, nickel or silver on the surface, or an aluminum-cadmium alloy.

In an embodiment of the present disclosure, the current collector may include, for example, a copper foil having a thickness of 6 µm to 30 µm, for example, 10 µm.

In addition, the negative electrode according to an embodiment of the present disclosure may further include any component commonly used in a negative electrode of a lithium secondary battery, in particular, a lithium-sulfur battery, without hindering the purpose of the present disclosure.

According to another aspect of the present disclosure, there is provided a lithium secondary battery including the above-described negative electrode.

In an embodiment of the present disclosure, the lithium secondary battery may include a lithium-sulfur battery including a sulfur-based compound containing a sulfur (S)-sulfur (S) bond as a positive electrode active material, but the present disclosure is not limited thereto.

The lithium secondary battery according to an aspect of the present disclosure includes the above-described negative electrode, a positive electrode, a separator between the negative electrode and the positive electrode, an electrolyte and a battery case.

In an embodiment of the present disclosure, the positive electrode is not limited to a particular type and may include any positive electrode used in the lithium secondary battery, and when used in the lithium-sulfur secondary battery, the positive electrode includes a sulfur-based compound containing a sulfur (S)-sulfur (S) bond as the active material.

In an embodiment of the present disclosure, the positive electrode may include a positive electrode current collector and a positive electrode active material layer on one or two surfaces of the positive electrode current collector.

The positive electrode current collector is not limited to a particular type and may include any positive electrode current collector that supports a positive electrode active material, and has high conductivity without causing any chemical change in the corresponding battery. For example, the positive electrode current collector may include copper, stainless steel, aluminum, nickel, titanium, palladium, sintered carbon, copper or stainless steel treated with carbon, nickel or silver on the surface, or an aluminum-cadmium alloy.

The positive electrode current collector may have the microtextured surface to increase the bond strength with the positive electrode active material, and may come in different forms, for example, film, sheet, foil, mesh, net, porous body, foam or non-woven fabric.

The positive electrode active material layer includes the positive electrode active material and may further include a conductive material, a binder and an additive.

In an embodiment of the present disclosure, the positive electrode active material may include a sulfur-carbon composite.

In an embodiment of the present disclosure, the sulfur-carbon composite may include a porous carbon material; and a sulfur-based compound loaded onto at least one of an outer surface of the porous carbon material and the inside of pores of the porous carbon material. Because sulfur acting as the positive electrode active material has no electrical conductivity, it is used in combination with a conductive material such as the carbon material, and the porous carbon material may be used to load the sulfur. In addition, the sulfur-based compound may include, for example, inorganic sulfur (S₈), lithium sulfide (Li₂S), lithium polysulfide (Li₂Sx, 1 < x ≤ 8), a disulfide compound, a carbon-sulfur polymer ((C₂S_{y})ₙ, y = 2.5 to 50, n ≥ 2), lithium sulfide (Li₂S) or two or more of them. Preferably, the sulfur-based compound may include inorganic sulfur (S₈).

In an embodiment of the present disclosure, the porous carbon material is used to load the sulfur-based compound as the positive electrode active material, provide the skeleton for holding the sulfur-based compound uniformly and stably and improve the conductivity of the positive electrode, and is not limited to a particular type and may include any carbon material having porous properties.

The porous carbon material may be spherical, rod-like, needle-like, platy, tubular or bulky in shape, and is not limited to a particular shape and may have any shape commonly used in the lithium-sulfur battery. The porous carbon material may include any commonly used ones having a porous structure or high specific surface area.

For example, the porous carbon material may include at least one selected from the group consisting of graphite; graphene; carbon black such as Denka black, acetylene black, Ketjen black, channel black, furnace black, lamp black or thermal black; carbon nanotubes (CNTs) such as single-walled carbon nanotubes (SWCNT) or multi-walled carbon nanotubes (MWCNT); carbon fibers such as graphite nanofibers (GNF), carbon nanofibers (CNF) or activated carbon fibers (ACF); and graphite such as natural graphite, artificial graphite or expandable graphite and activated carbon, but is not limited thereto. Preferably, the porous carbon material may be carbon nanotubes.

In an embodiment of the present disclosure, the porous carbon material may include, for example, carbon nanotubes (CNT).

In an embodiment of the present disclosure, the sulfur-carbon composite may include the sulfur-based compound in an amount of 65 wt% or more, for example, from 65 wt% to 90 wt%, from 65 wt% to 85 wt%, from 70 wt% to 80 wt%, or from 70 wt% to 75 wt%, based on the total weight of the sulfur-based compound and the porous carbon material.

When the amount of the sulfur-based compound in the sulfur-carbon composite lies in the aforementioned range, this may have a beneficial effect on electron transfer area of the sulfur-carbon composite and electrolyte wettability of the positive electrode, and for example, an advantageous effect of increasing the usable surface area in the sulfur-carbon composite, thereby suppressing the elution of sulfur from the positive electrode, but the present disclosure is not limited thereto.

The method for producing the sulfur-carbon composite is not limited to a particular one in the present disclosure, and may include any method commonly used in the art. For example, one of the methods may include simply mixing the sulfur and the porous carbon material and performing thermal treatment to form a composite.

In addition to the above-described composition, the positive electrode active material may include at least one selected from transition metal elements, Group IIIA elements, Group IVA elements, sulfur compounds of these elements and alloys of these elements and sulfur.

The transition metal elements may include Sc, Ti, V, Cr, Mn, Fe, Co, Ni, Cu, Zn, Y, Zr, Nb, Mo, Tc, Ru, Rh, Pd, Os, Ir, Pt, Au or Hg, the Group IIIA elements may include Al, Ga, In or Ti, and the Group IVA elements may include Ge, Sn or Pb.

In an embodiment of the present disclosure, the conductive material, the binder and other component may include those commonly used in the art and are not limited to particular ones in the present disclosure.

In an embodiment of the present disclosure, the separator separates or insulates the positive electrode from the negative electrode and allows lithium ion transport between the positive electrode and the negative electrode, may be made of a porous nonconductive or insulating material, and is not limited to a particular type and may include any separator commonly used in the lithium secondary battery. The separator may include a free-standing film or a coating layer added to the positive electrode and/or the negative electrode.

In an embodiment of the present disclosure, the electrolyte act as a medium for the movement of ions involved in electrochemical reaction of the lithium secondary battery, for example, the lithium-sulfur battery, and may include a non-aqueous solvent and a lithium salt.

The electrolyte is not limited to a particular type and may include any electrolyte having composition that may be used in the lithium secondary battery, to be specific, the lithium-sulfur battery.

In an embodiment of the present disclosure, the lithium-sulfur battery may have a variety of shapes, for example, a coin shape, a pouch shape or a cylindrical shape, but is not limited thereto.

As described above, when the negative electrode according to an embodiment of the present disclosure is applied to the lithium secondary battery, the effect of the protective layer on physically preventing dendrite growth and improving ionic conductivity may contribute to the suppression of dendrite growth on the negative electrode surface, thereby improving the life and Coulombic efficiency of the battery.

In particular, according to an embodiment of the present disclosure, the lithium-sulfur battery having improved life and Coulombic efficiency may be provided.

According to another embodiment of the present disclosure, there is provided a method for manufacturing the lithium secondary battery.

The method for manufacturing the lithium secondary battery is not limited thereto, but may, for example, include the steps of preparing the negative electrode having the protective layer on at least a part of one surface thereof, and placing the separator between the positive electrode and the negative electrode. In this instance, the protective layer of the negative electrode is preferably disposed on the contact surface between the negative electrode and the separator.

In an embodiment of the present disclosure, the step of preparing the negative electrode may include forming the protective layer on one surface of the lithium metal layer.

For example, in an embodiment of the present disclosure, the step of preparing the negative electrode may include coating the slurry for forming the protective layer on at least a part of one surface of the lithium metal layer and drying the slurry to form the protective layer.

In an embodiment of the present disclosure, for the composition of the slurry for forming the protective layer, reference is made to the foregoing description.

The negative electrode manufactured according to an embodiment of the present disclosure includes the lithium metal layer and the protective layer on at least a part of one surface of the lithium metal layer. In addition, the protective layer includes the ion conductive inorganic particles and the binder polymer, and the thickness of the protective layer may range from 4% to 15% based on 100% thickness of the lithium metal layer.

Manufacturing the lithium secondary battery using the negative electrode having the protective layer on the lithium metal layer according to an embodiment of the present disclosure may include placing the negative electrode such that the surface having the protective layer faces the separator. In positioning the protective layer at the interface between the negative electrode and the separator, the protective layer according to an embodiment of the present disclosure preferably contacts the separator after it is formed on the lithium metal layer. In general, the separator of the lithium secondary battery is made of a porous material and has a plurality of pores in the surface. In this instance, when the protective layer including the ion conductive inorganic particles and the binder polymer is formed on the separator according to an embodiment of the present disclosure, at least a part of the pores of the separator may be clogged by the binder polymer, causing performance degradation of the separator. Alternatively, in order to prevent the clogged pores of the separator, the binder polymer may be used in small amounts or the limited type of binder polymer may be used. The negative electrode having the protective layer on the lithium metal layer according to an embodiment of the present disclosure may have an advantage of preventing the infiltration of the binder polymer into the substrate (i.e., the lithium metal layer), thereby achieving a uniform distribution of the ion conductive inorganic particles and the binder polymer in the protective layer and preventing the protective layer from chipping in the event of a change in volume of the negative electrode, but the present disclosure is not limited thereto.

Hereinafter, examples are presented to help the understanding of the present disclosure, but the following examples are provided to describe the present disclosure for illustrative purposes, and it will be apparent to those skilled in the art that a variety of changes and modifications may be made within the technical aspects and scope of the present disclosure, and obviously, such changes and modifications fall within the scope of the appended claims.

### [Preparation of slurry for forming protective layer]

A slurry for forming a protective layer was prepared with the composition in TABLE 1 as follows:

### Preparation Example 1

9g of lithium lanthanum zirconate (LLZO) having the particle size D₅₀ of 300 nm (Firm-Lithium New Energy Technology (China)) as ion conductive inorganic particles was added to 21 g of tetrahydrofuran (THF) (Aldrich, anhydrous tetrahydrofuran) (30 wt%), mixed using zirconia balls (1 mm) and stirred for 5 minutes at 80 G using an acoustic mixer (Resodyn, Lab RAM I) to prepare an LLZO dispersion.

5 wt% of HFP-PVDF polymer (Solvay, Solef 20808) having the HFP substitution ratio of 8% as a binder polymer was added to a mixed solvent of tetrahydrofuran (THF) and 1,2-dimethoxyethane (DME) (a mass ratio 1/1) to prepare a binder solution.

The as-prepared LLZO dispersion and the as-prepared binder solution were mixed such that a mass ratio of the LLZO and the binder polymer is 9:1, and a mixed solvent of THF and DME (a mass ratio of 1/1) as a solvent was added and mixed together for 30 minutes to prepare the slurry for forming the protective layer having the solid content of 20 wt%.

### Preparation Example 2

A slurry for forming a protective layer was prepared by the same method as Preparation Example 1, except that HFP-PVDF polymer (Solvay, Solef 21510) having the HFP substitution ratio of 15% was used as the binder polymer (solid content 20 wt%).

### Preparation Example 3

A slurry for forming a protective layer was prepared by the same method as Preparation Example 1, except that the binder solution was prepared by adding HFP-PVDF polymer (Solvay, Solef 75130) having the HFP substitution ratio of 5% as the binder polymer to N-methyl-2-pyrrolidone (NMP) (solid content 30 wt%).

### Preparation Example 4

A slurry for forming a protective layer was prepared by the same method as Preparation Example 2, except that the mass ratio of the LLZO and the binder polymer was 13:100 (solid content: 20 wt%).

### Comparative Preparation Example 1

The as-prepared binder solution alone was prepared as the slurry for forming the protective layer without mixing with the LLZO dispersion.

### Comparative Preparation Example 2

The as-prepared LLZO dispersion was prepared as the slurry for forming the protective layer without mixing with the binder solution.

**[TABLE 1]**

| Composition | Preparation Example 1 | Preparation Example 2 | Preparation Example 3 | Preparation Example 4 |
|---|---|---|---|---|
| LLZO/PVDF (mass ratio) | 9/1 | 9/1 | 9/1 | 13/100 |
| Type of binder polymer | 8% HFP-PVDF | 15% HFP-PVDF | 5% HFP-PVDF | 15% HFP-PVDF |
| Solvent (mass ratio) | THF/DME (1/1) | THF/DME (1/1) | NMP | THF/DME (1/1) |
| Solid content (%) | 20% | 20% | 30% | 20% |
| Condition of coating liquid | Good dispersibility | Good dispersibility | Good dispersibility | Good dispersibility |

### [Manufacture of negative electrode]

A laminate single-sided lithium foil of a 10 µm-thick copper foil and a 30 µm or 45 µm-thick lithium foil was prepared.

Subsequently, the as-prepared slurry for forming the protective layer was coated on the lithium side of the single-sided lithium foil, flattened to a constant thickness using a Meyer bar, and dried in a 50°C oven for 5 minutes to 60 minutes to completely dry the slurry according to the coating amount of the slurry. Through this, a negative electrode having a protective layer on the surface of the lithium metal foil was manufactured.

TABLE 2 to TABLE 4 below summarize the characteristics of each of the manufactured negative electrodes, and Comparative Example 1 used the single-sided lithium foil having no protective layer as the negative electrode.

### Thickness measurement of protective layer

The thickness was measured at five points where the protective layer was coated in the manufactured negative electrode by using a U-Hite thickness gauge from TESA, and the average thickness was obtained. The measuring pressure of the thickness gauge was 0.6 N, and precision was 0.01 µm.

### Surface observation of protective layer

A surface image of the as-prepared negative electrode were acquired at 5 kV using Jeol's FESEM (IT-800 SHL) at 1000x magnification.

In the surface image, LLZO particle size and hole size and shape were observed, and when observing the LLZO particle size, the particle size was measured at 5,000x magnification, and when observing the hole size, observation was done at 1,000x magnification.

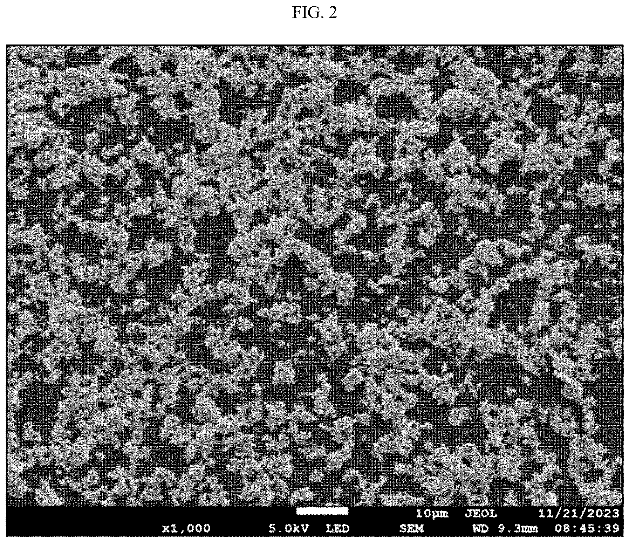

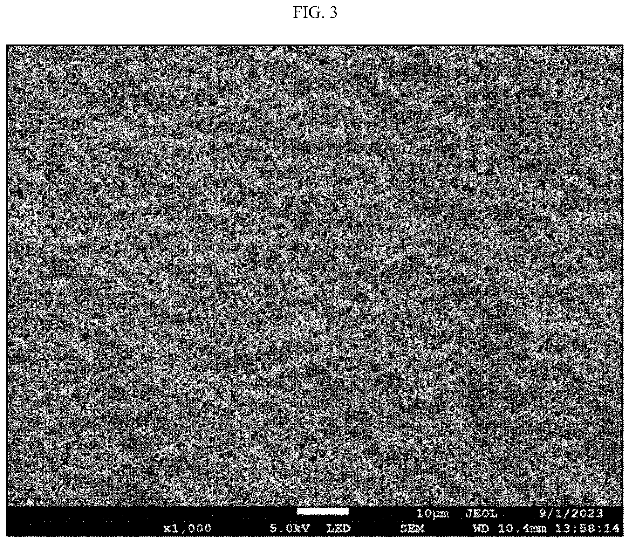

FIG. 1 shows the SEM image of the negative electrode surface of Example 3 below, FIG. 2 shows the SEM image of the negative electrode surface of Comparative Example 4 below, and FIG. 3 shows the SEM image of the negative electrode surface of Comparative Example 5 below.

**[TABLE 2]**

| Negative electrode | Example 1 | Example 2 | Example 3 | Example 4 |
|---|---|---|---|---|
| Slurry for forming protective layer | Preparation Example 1 | Preparation Example 2 | Preparation Example 2 | Preparation Example 2 |
| LLZO particle size (D₅₀) | 300 nm | 300 nm | 300 nm | 300 nm |
| Protective layer thickness | 1.5 µm | 2.6 µm | 3.1 µm | 3.0 µm |
| Lithium foil thickness | 30 µm | 30 µm | 30 µm | 30 µm |
| Protective layer thickness/Lithium foil thickness X 100 | 5% | 8.7% | 10.3% | 10% |
| LLZO particle size/Protective layer thickness X 100 | 20% | 11.5% | 9.7% | 10% |

**[TABLE 3]**

| Negative electrode | Comparativ e Example 1 | Comparativ e Example 2 | Comparativ e Example 3 | Comparativ e Example 4 |
|---|---|---|---|---|
| Slurry for forming protective layer | - | Preparation Example 2 | Preparation Example 3 | Preparation Example 2 |
| LLZO particle size (D₅₀) | - | 300 nm | 300 nm | 300 nm |
| Protective layer thickness | - µm | 16 µm | 19.5 µm | 0.3 µm |
| Lithium foil thickness | 30 µm | 45 µm | 45 µm | 30 µm |
| Protective layer thickness/Lithium foil thickness X 100 | - | 35.6% | 43.3% | 1% |
| LLZO particle size/Protective layer thickness X 100 | - | 1.9% | 1.5% | 100% |

**[TABLE 4]**

| Negative electrode | Comparati ve Example 5 | Comparative Example 6 | Comparative Example 7 | Comparati ve Example 8 |
|---|---|---|---|---|
| Slurry for forming protective layer | Preparatio n Example 2 | Comparative Preparation Example 1 | Comparative Preparation Example 2 | Preparatio n Example 4 |
| LLZO particle size (D₅₀) | 300 nm | 300 nm | 300 nm | 300 nm |
| Protective layer thickness | 6.2 µm | 1.0 µm | 3.0 µm | 1.0 µm |
| Lithium foil thickness | 30 µm | 30 µm | 30 µm | 30 µm |
| Protective layer thickness/Lithium foil thickness X 100 | 20.7% | 3.3% | 10% | 3.3% |
| LLZO particle size/Protective layer thickness X 100 | 4.8% | 30% | 10% | 30% |

### [Manufacture of lithium secondary battery]

A coin cell was manufactured using each of the as-prepared negative electrodes as follows:
As a positive electrode active material, inorganic sulfur (S₈) and carbon nanotubes (CNTs) were mixed to prepare a sulfur-carbon composite (S₈ 70 wt%), and 96 wt% of the as-prepared sulfur-carbon composite and 4 wt% of polyacrylic acid (PAA) as a binder were mixed to prepare a positive electrode slurry composition. The positive electrode slurry composition was coated on an aluminum current collector and dried to manufacture a positive electrode with loading of 3.4 mAh/cm², and the positive electrode was punched into a size of 14 φ.

The as-prepared negative electrode was punched into a size of 15 φ, and a polyethylene separator having a thickness of 12 µm and a porosity of 46 vol% was punched into a size of 19 φ and positioned between the positive electrode and the negative electrode.

An assembly of the positive electrode/the separator/the negative electrode was placed in a coin-type case, 50 µl of electrolyte was injected and the lid was closed to seal the case (El/S ratio = 11.1 g/g).

In this instance, the electrolyte includes 0.75 M lithium salt (LiTFSI) and 2.1 wt% lithium nitrate (LiNO₃) dissolved in a mixed solvent containing dimethyl ether (DME) : 2-methyl furan (2-MeF) at a volume ratio of 8:2.

### [Performance evaluation of lithium secondary battery]

The as-prepared lithium secondary battery was aged at room temperature (25°C) for 24 hours, then discharged at 0.5C and charged at 0.3C repeatedly for 6 cycles and activated.

Subsequently, charging and discharging were repeated at 1C discharge and 0.5C charge until the capacity retention reaches 80% compared to 1st cycle discharge capacity, and the number of repetitions of charging and discharging (cycle number) when the capacity retention is 80% was evaluated as the life of the battery. The evaluation results are shown in TABLE 5 and TABLE 6 below.

**[TABLE 5]**

| Performance evaluation of lithium secondary battery | | | | | | |
|---|---|---|---|---|---|---|
| Negative electrode | Example 1 | Example 2 | Example 3 | Example 4 | Comparative Example 1 | Comparative Example 2 |
| 1^{st} cycle discharge capacity (mAh/cm2) | 754.1 | 746.6 | 745.8 | 754.1 | 764.5 | 771.5 |
| Life (80% retention) | 273 | 238 | 364 | 224 | 173 | 150 |
| Capacity retention % (100 cycle) | 110 | 104 | 100 | 90.7 | 105 | 86.1 |

**[TABLE 6]**

| Performance evaluation of lithium secondary battery | | | | | | |
|---|---|---|---|---|---|---|
| Negative electrode | Comparati ve Example 3 | Comparati ve Example 4 | Comparati ve Example 5 | Comparati ve Example 6 | Comparati ve Example 7 | Comparati ve Example 8 |
| 1^{st} cycle discharge capacity (mAh/cm2) | 808.7 | 746.6 | 745.8 | 764.5 | 771.5 | 808.7 |
| Life (80% retention) | 108 | 111 | 85 | 118 | 171 | 95 |
| Capacity retention % (100 cycles) | 81.4 | 85.8 | 76.3 | 86.2 | 93.0 | 79.5 |

Referring to the evaluation results, it was confirmed that the batteries according to Examples 1 to 4 lasted 200 cycles or more, while the batteries according to Comparative Examples 1 to 8 lasted less than 200 cycles. Through the evaluation results, it was confirmed that the life of the lithium secondary battery using the negative electrode according to an embodiment of the present disclosure was much longer than that of Comparative Examples.

Specifically, it was confirmed that the life of the battery using the negative electrode of Comparative Example 1 having no protective layer was short. In addition, it was confirmed that even though the negative electrode having the protective layer including the ion conductive particles and the binder polymer was used, like Comparative Examples 2, 3 and 5, when the thickness of the protective layer was overly large compared to the lithium metal layer, the life was short. In particular, referring to FIG. 3, in the negative electrodes of Comparative Examples 2, 3 and 5, through surface observation, holes of 2 µm or more in diameter were observed in the surface, but the surface of the lithium metal layer under the protective layer was not exposed through the holes.

In addition, it was confirmed that even though the negative electrode having the protective layer including the ion conductive particles and the binder polymer was used, like Comparative Examples 4 and 8, when the thickness of the protective layer was overly small compared to the lithium metal layer, the life was short. Referring to FIG. 2, the surface observation of the negative electrode shows that the protective layer was formed on the lithium metal layer, but was formed in an island shape with an area of less than 50% of the surface of the lithium metal layer. Based on this, it was inferred that the protective layer had no or little life improvement effect.

Further, it was confirmed that in the case of the batteries using the negative electrodes of Comparative Examples 6 and 7 in which the protective layer did not include the binder polymer or the ion conductive inorganic particles, the life was short.

Through the experiment, it was confirmed that the lithium secondary battery, especially the lithium-sulfur battery using the negative electrode according to an embodiment of the present disclosure may have a significant life improvement effect.

## Claims

1. A negative electrode for a lithium secondary battery, comprising:
a lithium metal layer; and
a protective layer on at least a part of a surface of the lithium metal layer,
wherein the protective layer includes ion conductive inorganic particles and a binder polymer, and
wherein a thickness of the protective layer ranges from 4% to 15% based on 100% thickness of the lithium metal layer.

2. The negative electrode for the lithium secondary battery according to claim 1,
wherein an average particle size (D₅₀) of the ion conductive inorganic particles is 50% or less of the thickness of the protective layer.

3. The negative electrode for the lithium secondary battery according to claim 1,
wherein the thickness of the protective layer ranges from 0.5 µm to 5 µm.

4. The negative electrode for the lithium secondary battery according to claim 1,
wherein the thickness of the protective layer ranges from 1 µm to 3.5 µm.

5. The negative electrode for the lithium secondary battery according to claim 1,
wherein the protective layer includes at least one hole having a diameter of 2 µm or more in the surface thereof.

6. The negative electrode for the lithium secondary battery according to claim 5,
wherein the surface of the lithium metal layer is exposed to an outside at a location at which the hole is formed.

7. The negative electrode for the lithium secondary battery according to claim 5, wherein the diameter of the hole ranges from 2 µm to 10 µm.

8. The negative electrode for the lithium secondary battery according to claim 1,
wherein an area in which the protective layer is formed on the lithium metal layer is 50% or more based on 100% area of the surface of the lithium metal layer having the protective layer.

9. The negative electrode for the lithium secondary battery according to claim 1,
wherein the ion conductive inorganic particles include lithium lanthanum zirconate (LLZO), lithium aluminum titanium phosphate (LATP), lithium aluminum germanium phosphate (LAGP), lithium lanthanum titanate (LLTO) or a mixture thereof.

10. The negative electrode for the lithium secondary battery according to claim 1,
wherein the binder polymer includes a polymer including a vinylidene-derived repeating unit and a hexafluoropropylene (HFP)-derived repeating unit.

11. The negative electrode for the lithium secondary battery according to claim 10,
wherein the polymer including the vinylidene-derived repeating unit and the hexafluoropropylene (HFP)-derived repeating unit has a HFP substitution ratio between 3% and 20%.

12. The negative electrode for the lithium secondary battery according to claim 1,
wherein a mass ratio of the ion conductive inorganic particles to the binder polymer ranges from 99:1 to 50:50.

13. A lithium secondary battery comprising: the negative electrode for the lithium secondary battery according to any one of claims 1 to 12, a positive electrode, a separator between the negative electrode and the positive electrode, an electrolyte and a battery case.

14. The lithium secondary battery according to claim 13,
wherein the positive electrode includes a sulfur-based compound containing a sulfur (S)-sulfur (S) bond as an active material.

15. The lithium secondary battery according to claim 14,
wherein the active material of the positive electrode includes a sulfur-carbon composite in which the sulfur-based compound is loaded onto at least one of an outer surface of a porous carbon material and an inside of pores of the porous carbon material.

16. The lithium secondary battery according to claim 15,
wherein the sulfur-carbon composite includes the sulfur-based compound in an amount of 65 wt% or more based on a total weight of the sulfur-based compound and the porous carbon material.

17. The lithium secondary battery according to claim 13,
wherein the lithium secondary battery includes a coin-type battery, a pouch-type battery or a cylindrical battery.

18. A method for manufacturing a lithium secondary battery, the method comprising the steps of:
preparing a negative electrode having a protective layer on at least a part of a surface thereof; and
placing a separator between a positive electrode and the negative electrode,
wherein the protective layer is present on a contact surface between the negative electrode and the separator,
wherein the step of preparing the negative electrode includes:
coating a slurry for forming the protective layer on at least a part of a surface of a lithium metal layer and drying to form the protective layer,
wherein the slurry for forming the protective layer includes ion conductive inorganic particles and a binder polymer, and
wherein a thickness of the protective layer ranges from 4% to 15% based on 100% thickness of the lithium metal layer.
